# EUROPEAN PATENT APPLICATION

(11) **EP 1 677 242 A1**
(43) Date of publication of application: **05.07.2006**
(21) Application number: 05111768.7
(22) Date of filing: 07.12.2005
(51) Int. Cl.: G06Q 10/00

(54) **Calendar rule definition, ranking and expansion**

(30) Priority: 30.12.2004 US 26469
(71) Applicant: Microsoft Corporation, Redmond WA 98052 (US)
(72) Inventor: Stenerson, Derik B., 98052, Redmond (US); Pardo, Ehud, 98052, Redmond (US); Baimetov, Ilya, 98052, Redmond (US); Ott, Michael J., 98052, Redmond (US); Chiknavaryan, Stanislav, 98052, Redmond (US)
(74) Representative: Grünecker, Kinkeldey, Stockmair & Schwanhäusser Anwaltssozietät

(57) **Abstract**

The method may include providing at least one primary calendar, providing a plurality of calendar rules, each of the plurality of rules comprising a rank and a rule-scope. The method may also include providing a representation of the primary calendar and the plurality of calendar rules, and allowing expansion of the representation of the plurality of calendar rules.

## Description

### Background

Calendaring systems attempt to assist users to keep track of resources, including employees, services, and capital equipment. Each resource may have its own calendar, or the resource may be part of a group calendar. Preferably, such a calendaring system allows a scheduler to assign multiple resources optimally, a meeting organizer to find the right attendees and room, a dispatcher to find and assess conflicts, and a manager to fine-tune the system for optimal resource utilization, to name a few. For example, a calendar for a delivery driver work shift may be compared with a calendar for a delivery truck resource to determine dates and times when the driver is available to drive, and the truck is available to be driven. An accurate result preferably includes consideration of any other calendars related to the driver and the delivery truck. Such additional calendars may include recurring break hours for lunch, recurring preventative maintenance schedules for the truck, and a holiday calendar, to name a few. The availability of a particular employee or capital equipment resource may be described by an interaction of a number of calendars. As such, a query to only the driver and truck calendars may not provide schedule information for various nested recurring events or expand such information to a desired scope, particularly when a holiday calendar, shared group calendar, seasonal calendars, or other types of calendars may affect the resources.

### Summary

A method and apparatus for calendaring is disclosed. The method may include providing at least one primary calendar, providing a plurality of calendar rules, each of the plurality of rules comprising a rank and a rule-scope, providing a representation of the primary calendar and the plurality of calendar rules, and allowing expansion of the representation of the plurality of calendar rules. The plurality of calendar rules may define at least one nested calendar and may also comprise calendar rules. The at least one nested calendar may also contain no calendar rules and return a block of time. Alternatively, the at least one of the plurality of calendar rules may modify the rule-scope of the calendar rules of the at least one nested calendar. The method may also provide a transparency property to the plurality of calendar rules in which a first transparency property indicates a calendar rule that modifies a runtime scope and a second transparency property that indicates a calendar rule that does not modify the runtime scope. Furthermore, the representation of one of the plurality of calendar rules returns a series of time blocks, the expansion of the plurality of calendar rules occurs in order of rank, and expanding the representation of the plurality of calendar rules further includes expansion of the calendar rule within at least one of its entire rule-scope and a user-defined rule-scope. A computer system with a processor to execute instructions and a computer readable medium with computer instructions are disclosed to execute the method.

### Drawings

Fig. 1 is a block diagram of a computing system that may operate in accordance with the claims;

Fig. 2 is an illustration of an unexpanded display of a calendar in accordance with the claims;

Fig. 3 is an illustration of operations in accordance with the claims;

Fig. 4 is an illustration of a high level display of a calendar in accordance with the claims; and

Fig. 5 is an illustration of a low level display of a calendar in accordance with the claims.

### Description

Although the following text sets forth a detailed description of numerous different embodiments, it should be understood that the legal scope of the description is defined by the words of the claims set forth at the end of this patent. The detailed description is to be construed as exemplary only and does not describe every possible embodiment since describing every possible embodiment would be impractical, if not impossible. Numerous alternative embodiments could be implemented, using either current technology or technology developed after the filing date of this patent, which would still fall within the scope of the claims.

It should also be understood that, unless a term is expressly defined in this patent using the sentence "As used herein, the term ' ' is hereby defined to mean..." or a similar sentence, there is no intent to limit the meaning of that term, either expressly or by implication, beyond its plain or ordinary meaning, and such term should not be interpreted to be limited in scope based on any statement made in any section of this patent (other than the language of the claims). To the extent that any term recited in the claims at the end of this patent is referred to in this patent in a manner consistent with a single meaning, that is done for sake of clarity only so as to not confuse the reader, and it is not intended that such claim term by limited, by implication or otherwise, to that single meaning. Finally, unless a claim element is defined by reciting the word "means" and a function without the recital of any structure, it is not intended that the scope of any claim element be interpreted based on the application of 35 U.S.C. § 112, sixth paragraph.

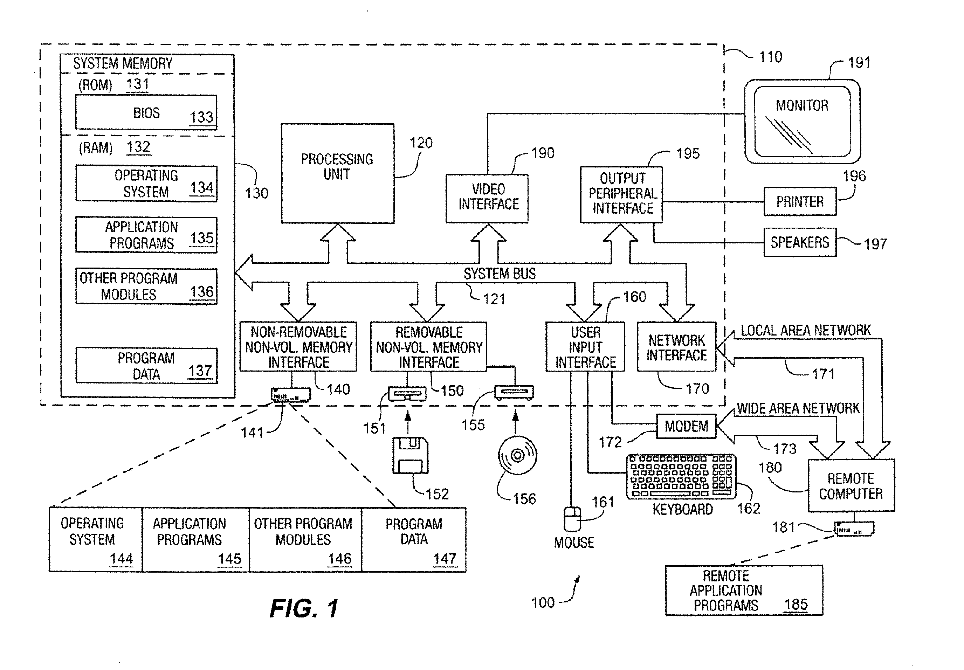

Fig. 1 illustrates an example of a suitable computing system environment 100 on which a system for the steps of the claimed method and apparatus may be implemented. The computing system environment 100 is only one example of a suitable computing environment and is not intended to suggest any limitation as to the scope of use or functionality of the method of apparatus of the claims. Neither should the computing environment 100 be interpreted as having any dependency or requirement relating to any one or combination of components illustrated in the exemplary operating environment 100.

The steps of the claimed method and apparatus are operational with numerous other general purpose or special purpose computing system environments or configurations. Examples of well known computing systems, environments, and/or configurations that may be suitable for use with the methods or apparatus of the claims include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The steps of the claimed method and apparatus may be described in the general context of computer-executable instructions, such as program modules, being executed by a computer. Generally, program modules include routines, programs, objects, components, data structures, etc. that perform particular tasks or implement particular abstract data types. The methods and apparatus may also be practiced in distributed computing environments where tasks are performed by remote processing devices that are linked through a communications network. In a distributed computing environment, program modules may be located in both local and remote computer storage media including memory storage devices.

With reference to Fig. 1, an exemplary system for implementing the steps of the claimed method and apparatus includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 1 illustrates operating system 134, application programs 135, other program modules 136, and program data 137.

The computer 110 may also include other removable/non-removable, volatile/nonvolatile computer storage media. By way of example only, Fig. 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 1, provide storage of computer readable instructions, data structures, program modules and other data for the computer 110. In Fig. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Fig. 1. The logical connections depicted in Fig. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 1 illustrates remote application programs 185 as residing on memory device 181. It will be appreciated that the network connections shown are exemplary and other means of establishing a communications link between the computers may be used.

A calendar may be a collection of calendar rules for a particular period of time, that period of time also referred to as a rule-scope. Calendars and calendar rules may be used to represent complex recurring intervals of time likely found in working calendars for employees and capital equipment. A calendar may return one or more time blocks with information about the blocks of time. Furthermore, if the calendar contains calendar rules, the calendar rules may be processed in view of their rule-scope. The processed calendar rule may output a runtime scope which may be passed on to other calendars and calendar rules. The calendar rules may further nest additional calendars such that the nested calendars receive the runtime scope of previous calendars.

Calendar rules may also include a transparency property. If the transparency property for a calendar rule is true, i.e., the calendar rule is transparent, then the rule may be processed and it will modify the runtime scope before passing it on to other calendars and calendar rules. On the other hand, if the calendar rule is not transparent, sometimes referred to as opaque, then the calendar rule may be processed, but it will not modify the runtime scope before passing it on to other calendars. The transparency may affect the runtime scope in at least three ways. First, the calendar rule may process its rule-scope and modify the runtime scope if the rule is transparent. Second, the calendar rule may process its rule-scope, yet not alter the runtime scope. Third, the calendar rule may process a portion of its rule-scope and pass a partially modified runtime scope.

A calendar without calendar rules, on the other hand, may be a leaf and may return a series of time blocks or intervals according to a start time, a duration, and a recurrence pattern. A leaf calendar, therefore, has no nested calendars below it. The series of time blocks may be specified by an industry-standard calendar protocol, such as the iCal Global standard.

Calendar rules include a rank for which the calendar rules may be processed or expanded recursively. That is, higher ranking calendars may be processed or expanded before lower ranking calendar rules are processed or expanded. Calendar rule processing and expansion may continue in rank order until the last nested calendar is reached, or until a leaf calendar is reached. Higher ranking calendar rules may also have a higher priority over lower ranking calendar rules when they are processed or expanded for a similar rule-scope.

Calendar rules may perform an operation for any rule-scope overlap. If a calendar rule is transparent, then the operation may be performed on it, as well as any rules subsequent to it, regardless of the transparency of those subsequent calendar rules. Operations may include, but are not limited to, intersecting, subtracting, and union. As will be discussed later, an intersecting operation may illustrate resource unavailability when multiple calendars contain overlapping calendar rules. A subtracting operation may illustrate availability when multiple calendars contain overlapping calendar rules, and a union operation may illustrate any events, either available or unavailable, which may occur when multiple calendars contains overlapping calendar rules. A user may also define a specific operation as needed to handle overlapping calendar rules.

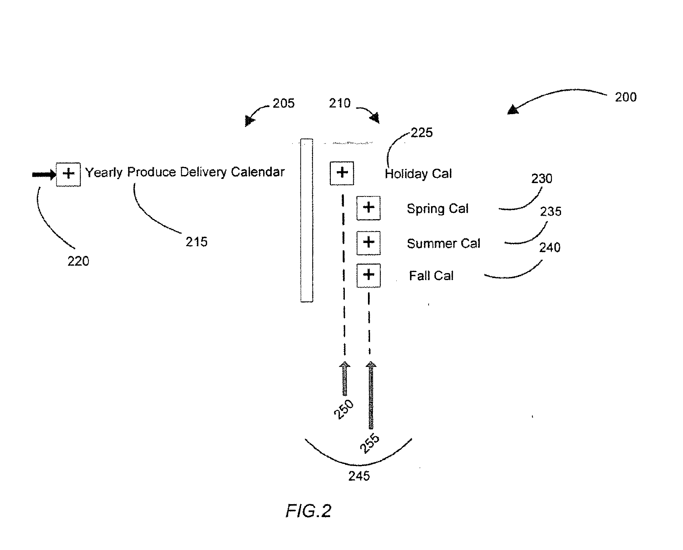

Fig. 2 may be an illustration of a method in accordance with the claims. A calendar 200 may include a high-level display section 205 and a lower-level display section 210. The high-level display section 205 may present a user with an illustration of calendars defined by calendar rules from a high level of detail that, when selected, results in an abstraction of detail on the lower-level display section 210. For example, when the calendar entitled "Yearly Produce Delivery Calendar" 215 is selected, as indicated by a selection arrow 220, a lower level of detail regarding that calendar may be displayed in the lower-level display section 210. The lower-level display section 210 may indicate that within the "Yearly Produce Delivery Calendar" 215 are four nested calendars, with each of those nested calendars defined by calendar rules from one of the higher ranking calendars. As shown in Fig. 2, the "Yearly Produce Delivery Calendar" 215 includes a Holiday Calendar 225, a Spring Calendar 230, a Summer Calendar 235, and a Fall Calendar 240. Each of those nested calendars may itself contain additional calendar rules.

The lower-level display section 210 may illustrate, in part, a hierarchy of nested calendars and an associated rank for each of the calendars, represented by a relative horizontal proximity 245. Note that a calendar's rank may be a function of the rank of the calendar rules therein. The highest level calendar in the lower-level display section 210, i.e., the Holiday Calendar 225, may be displayed with a left justification 250 to represent a high rank. Calendars may decrease in rank when positioned further to the right 255, and those calendars having a same horizontal justification may have the same rank. The Holiday Calendar 225, as the highest ranked nested calendar of the Yearly Produce Delivery Calendar 215, may impose its calendar rules upon lower ranking calendars. As such, the exemplary embodiment of Fig. 2 may illustrate that the Spring Calendar 230, Summer Calendar 235, and Fall Calendar 240 may derive some calendar rules from the higher ranking Holiday Calendar 225.

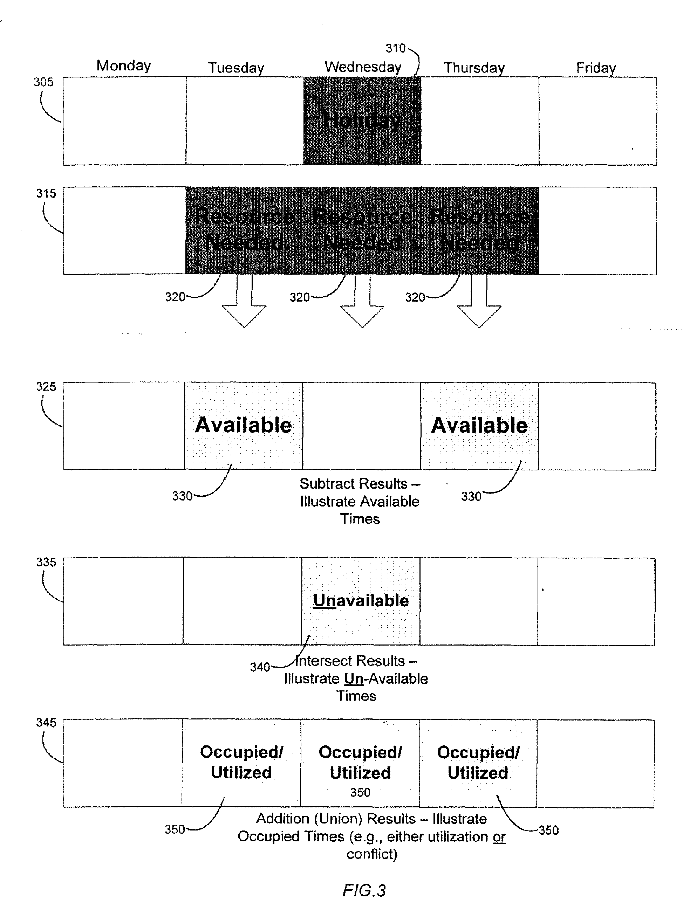

Figure 3 may be an illustration of calendar interaction in accordance with the claims. A holiday calendar rule may have a particular rule-scope 305 of one work-week, Monday through Friday. The holiday rule-scope 305 may illustrate that Wednesday of that work-week as a holiday 310. A rule-scope 315 of the spring calendar rule, for example, may also span from Monday through Friday. However, Tuesday through Thursday of that week may require a resource 320. These two calendar rules of similar rule-scope may overlap and an operation based on their respective calendar rules may execute to produce a result. In particular, if the holiday rule is of a higher rank than the spring calendar rule, then the holiday rule will modify the runtime scope to include the holiday 310. The lower ranking spring calendar rule will receive this runtime scope and process it for its rule-scope 315. As such, the operation performed on the overlapping rule-scope 305 and rule-scope 315 will give priority to the highest ranking rule, i.e., the holiday rule.

For example, if both the holiday rule and the spring calendar rule are transparent, a subtract operation 325 may illustrate a result of available times for a working resource 330. In this example, both Tuesday and Thursday produce no conflicts for the resource, however Wednesday prevents the resource from being utilized because of the holiday 310. Briefly returning to Fig. 2, the Holiday Calendar 225 may illustrate the highest rank of the nested calendars and, as such, it may take priority over the lower ranked Spring Calendar 230.

Similarly, an intersect operation 335 may illustrate an intersection between the holiday rule and the spring calendar rule. Assuming that the calendar's calendar rules are transparent, then the only intersection between these two rules of similar rule-scope is on Wednesday, thereby illustrating resource unavailability 340.

An addition, or union, operation 345 may illustrate any utilization or conflict between overlapping rules. Again, assuming the rules are transparent, the result of a union may show Tuesday through Thursday as being occupied or utilized 350. Various operations may execute to assist with exception handling, group calendaring, and scheduling. Furthermore, operations may be customized and executed on rules at a later time to perform hybrid permutations of intersecting, subtracting, and union. Calendar rules may also define and modify a rule-scope for lower ranking rules that may be within nested calendars.

On the other hand, if the calendar rules of either or both of these calendars dictate that a calendar is not transparent (e.g., transparency property or flag = FALSE), then the operation between two or more calendars will not occur.

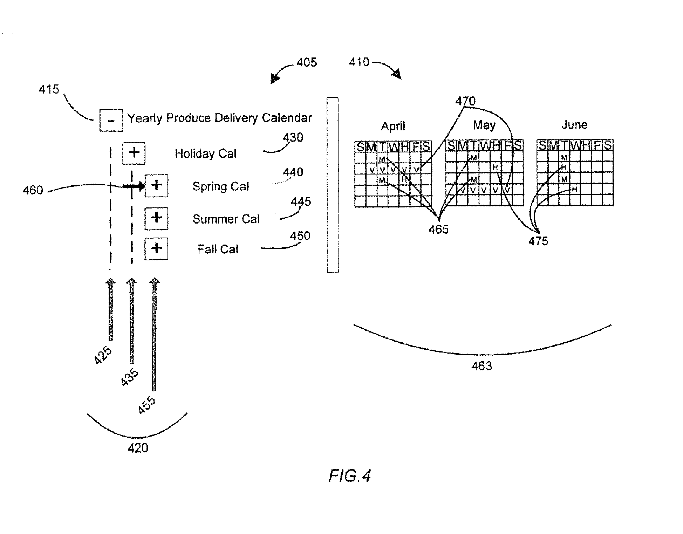

Fig. 4 may be an illustration of calendar expanding and resolving, that is, expanding the calendar rule within the rule-scope. Similar to Fig. 2, a high-level display section 405 is on the left and a low-level display section 410 is on the right-hand side. Unlike Fig. 2, however, the Yearly Produce Delivery Calendar 415 is expanded in Fig. 4, as shown by the "-" symbol, to illustrate nested calendars below. Rank 420 may be illustrated with the Yearly Produce Delivery Calendar 415 occupying the left-most justification 425, thereby establishing the highest rank. The Holiday Calendar 430 occupies the next highest rank 435. Finally, the Spring Calendar 440, Summer Calendar 445, and Fall Calendar 450 occupy the right-most justification 455 and, consequently, have the lowest rank. Again, a calendar's rank may be a function of the rank of its calendar rules.

Selection of the Spring Calendar 440, as shown by a selection arrow 460, may illustrate resolving the calendar rules on the low-level display section 410. The calendar rules of the Spring Calendar 440, for example, define a rule-scope of three months out of the year; April, May, and June. Although Fig. 4 illustrates a rule-scope 463 with a resolution of months, alternate rule-scope selections may include any level of detail, including, but not limited to, any number of months, weeks, days, hours, minutes, seasons and planetary years (e.g., Mars years). For example, a user may specify an alternate rule-scope for a more detailed view. The exemplary view of the low-level display section 410 may also illustrate details regarding further nested rules and calendars within the Spring Calendar 440. For example, April, May, and June each include a character "M" 465 on the first and third Tuesday, which may illustrate a recurring rule of maintenance for a resource. Similarly, a character "V" 470 may illustrate various calendar rules relating to vacation days for one or more resources, and "H" 475 may illustrate calendar rules relating to various holidays.

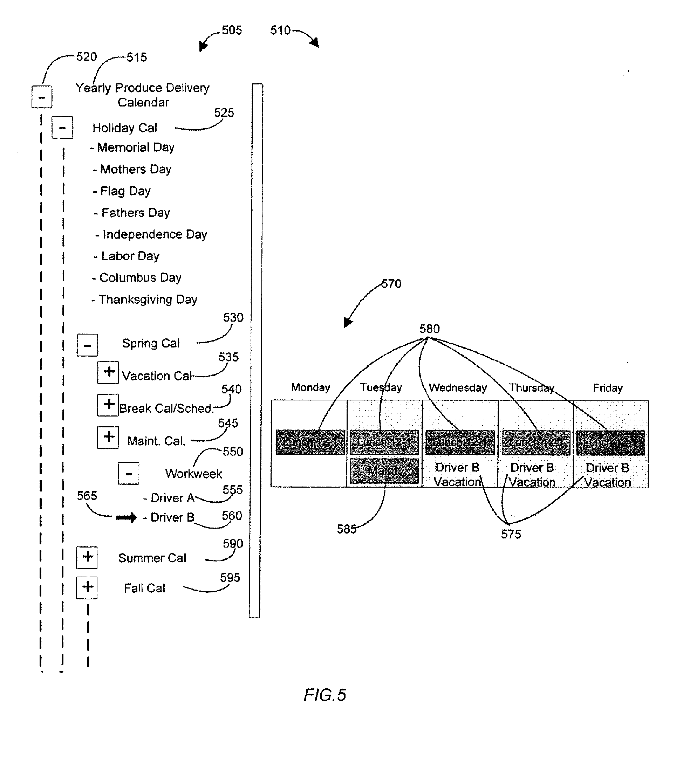

Fig. 5 may be an illustration of expanding a calendar and resolving it to a lowest level of detail. Again, the calendar display may be divided between a high-level display section 505 and a lower-level display section 510. The Yearly Produce Delivery Calendar 515 is expanded, as shown by a "-" symbol 520, to illustrate nested calendars below. The Holiday Calendar 525 is expanded to illustrate which of the various holidays may potentially overlap other calendars having the same, or lower rank. The Spring Calendar 530 is also expanded to illustrate nested calendars within it, including a Vacation Calendar 535, a Break Calendar 540, a Maintenance Calendar 545, and a recurring Workweek Calendar 550. Furthermore, within the Workweek Calendar 550 are two resources, Driver A 555, and Driver B 560, that work every week from Monday through Friday. Driver A 555 and Driver B 560 are leaf calendars and do not contain rules. As such, they will not pass or modify the runtime scope, rather they merely return blocks of time.

In addition to calendar rules, a calendar may contain metadata. For example, Driver A resource 555 may include information to indicate a particular specialty or knowledge of a particular delivery route. Such additional information may further improve a decision when scheduling various resources.

A particular rule-scope 570 may be shown upon selecting Driver B 560, as shown by selection arrow 565. As Driver B 560 contains no calendar rules it, consequently, contains no rule-scope. The rule-scope 570 shown may then be the rule-scope of a higher ranked calendar rule, e.g., a rule-scope of the workweek rule, or the spring calendar rule. For example, the scope 570 shown on the lower-level display 510 may include one particular week from a rule of the Spring Calendar 530. The calendar for Driver B inherits all rules of a higher rank, therefore the Vacation Calendar 535 may be shown to consume vacation days 575 on Wednesday through Friday, the Break Calendar 540 may be a recurring event that consumes every workday between noon and 1:00 p.m. 580, and the Maintenance Calendar 545 may be a recurring event that consumes the first and third Tuesday of each month 585. When the rules are expanded to produce the rule-scope 570 shown in Fig. 5, they may occur in order of rank. As such, the calendar rules relating to holidays may execute first to return instances of unavailability in the runtime scope. Moving down in rank, lower ranking calendar rules receive the runtime scope and process calendar rules relating to lunch break hours 540, vacation days 535, and maintenance days 545. Finally, at the lowest rank level the corresponding calendar rules of the Workweek Calendar 550 may expand and execute operations with other overlapping rule-scopes. An example of a maintenance calendar rule may include recurring dates when a delivery truck for Driver A or B is unavailable due to preventative maintenance procedures.

The resulting rule-scope 570 may be an accumulation of rule-scopes from several calendar rules which illustrate availability or unavailability of Driver B. Monday through Friday may be shaded to illustrate unavailability between the hours of 12:00 p.m. and 1:00 p.m. as a result of an intersect operation between the Workweek Calendar 550 and the Break Calendar 540. Similarly, Tuesday may be shaded to show unavailability as a result of a subtract operation between the Workweek Calendar 550 and the Maintenance Calendar 545. Wednesday through Friday may be shaded to illustrate resource unavailability as a result of a subtract operation between the Workweek Calendar 550 and the Vacation Calendar 535. Although not shown in Fig. 5, the Summer Calendar 590 and the Fall Calendar 595 may include similarly nested calendars which, when overlapped, may contain calendar rules of recurring events, transparency settings, and intersect, union, and subtract operations. Such operations allow for the calculation of resource availability.

Although the forgoing text sets forth a detailed description of numerous different embodiments, it should be understood that the scope of the patent is defined by the words of the claims set forth at the end of this patent. The detailed description is to be construed as exemplary only and does not describe every possible embodiment because describing every possible embodiment would be impractical, if not impossible. Numerous alternative embodiments could be implemented, using either current technology or technology developed after the filing date of this patent, which would still fall within the scope of the claims.

Thus, many modifications and variations may be made in the techniques and structures described and illustrated herein without departing from the spirit and scope of the present claims. Accordingly, it should be understood that the methods and apparatus described herein are illustrative only and are not limiting upon the scope of the claims.

## Claims

1. A method for calendaring, comprising:
providing at least one primary calendar;
providing a plurality of calendar rules, each of the plurality of rules comprising a rank and a rule-scope;
providing a representation of the primary calendar and the plurality of calendar rules; and
allowing expansion of the representation of the plurality of calendar rules.

2. The method of claim 1, wherein at least one of the plurality of calendar rules defines at least one nested calendar.

3. The method of claim 2, wherein the at least one nested calendar comprises calendar rules.

4. The method of claim 2, wherein the at least one nested calendar contains no calendar rules, and wherein the at least one nested calendar without calendar rules returns a block of time.

5. The method of claim 3, wherein the at least one of the plurality of calendar rules modifies the rule-scope of the calendar rules of the at least one nested calendar.

6. The method of claim 2, further comprising providing a transparency property to the plurality of calendar rules wherein a first transparency property indicates a calendar rule that modifies a runtime scope and a second transparency property that indicates a calendar rule that does not modify the runtime scope.

7. The method of claim 1, wherein the representation of one of the plurality of calendar rules returns a series of time blocks.

8. The method of claim 1, wherein the expansion of the plurality of calendar rules occurs in order of rank.

9. The method of claim 8, wherein expanding the representation of the plurality of calendar rules further comprises expansion of the calendar rule within at least one of its entire rule-scope and a user-defined rule-scope.

10. A computer readable medium comprising executable instructions for calendaring, comprising:
computer executable instructions for providing at least one primary calendar;
computer executable instructions for providing a plurality of calendar rules where the calendar rules comprise a rank and a rule-scope;
computer executable instructions for providing a representation of the primary calendar and the plurality of calendar rules; and
computer executable instructions for allowing expansion of the representation of the plurality of calendar rules.

11. The computer readable medium of claim 10, wherein at least one of the plurality of calendar rules defines at least one nested calendar.

12. The computer readable medium of claim 11, wherein the at least one nested calendar comprises calendar rules.

13. The computer readable medium of claim 11, wherein the at least one nested calendar contains no calendar rules, and wherein the at least one nested calendar without calendar rules returns a block of time.

14. The computer readable medium of claim 12, wherein the at least one of the plurality of calendar rules modifies the rule-scope of the calendar rules of the at least one nested calendar.

15. The computer readable medium of claim 11, further comprising providing a transparency property to the plurality of calendar rules wherein a first transparency property indicates a calendar rule that modifies a runtime scope and a second transparency property that indicates a calendar rule that does not modify the runtime scope.

16. A computing apparatus, comprising:
a display unit that is capable of generating video images;
an input device;
a processing apparatus operatively coupled to said display unit and said input device, said processing apparatus comprising a processor and a memory operatively coupled to said processor;
a network interface connected to a network and to the processing apparatus;
said processing apparatus being programmed to provide at least one primary calendar;
said processing apparatus being programmed to provide a plurality of calendar rules, each of the plurality of calendar rules comprising a rank and a rule-scope;
said processing apparatus being programmed to provide a representation of the primary calendar and the plurality of calendar rules; and
said processing apparatus being programmed to allow expansion of the representation of the plurality of calendar rules.

17. The computing apparatus of claim 16, wherein at least one of the plurality of calendar rules defines at least one nested calendar.

18. The computing apparatus of claim 17, wherein the at least one nested calendar comprises calendar rules.

19. The computing apparatus of claim 17, wherein the at least one nested calendar contains no calendar rules, and wherein the at least one nested calendar without calendar rules returns a block of time.

20. The computing apparatus of claim 18, wherein the at least one of the plurality of calendar rules modifies the rule-scope of the calendar rules of the at least one nested calendar.
